Europäisches Patentamt

European Patent Office

Office européen des brevets

(11) Veröffentlichungsnummer: **0 307 360**
**A2**

(12) **EUROPÄISCHE PATENTANMELDUNG**

(21) Anmeldenummer: **88810604.4**

(22) Anmeldetag: **05.09.88**

(51) Int. Cl.⁴: **H 02 G 3/08**

(30) Priorität: **08.09.87 CH 3450/87**

(43) Veröffentlichungstag der Anmeldung:
**15.03.89 Patentblatt 89/11**

(84) Benannte Vertragsstaaten: **CH DE FR IT LI**

(71) Anmelder: **LANZ OENSINGEN AG**
**Südringstrasse**
**CH-4702 Oensingen AG (CH)**

(72) Erfinder: **Mühlethaler, Erhard**
**Bernstrasse 59**
**CH-3314 Schalunen (CH)**

(74) Vertreter: **White, William et al**
**Isler AG Patentanwalts-Bureau Walchestrasse 23**
**CH-8006 Zürich (CH)**

(54) **Rangierdose für die Elektroinstallation.**

(57) Die im wesentlichen prismatische Dose(10) mit rechteckigem Boden(16) weist zwei Paare von gegenüberliegenden Seitenwänden (4) bzw. (2) auf. Das eine Paar (2) ist mit je einem übereinstimmenden, von der Deckelfläche ausgehenden Ausschnitt (6) versehen, der mit einer herausnehmbaren, in Führungen (8) gehaltenen Platte (40) abgedeckt ist. Es können zwei oder mehrere Rangierdosen (10, 10') zusammengeschlossen werden, um einen durchgehenden Raum zu bilden. Durch Verbindungsmittel, z.B. Klammern (14), die in Führungen (12) eingreifen, werden die Dosen aufeinander ausgerichtet. Es kann ein über mehrere Dosen durchgehender Deckel (38') eingesetzt werden.

Fig.1

**Beschreibung**

## Rangierdose für die Elektroinstallation

Die Erfindung betrifft eine Unterputz-Rangierdose mit abnehmbarem Deckel für die Elektroinstallation.

Rangierdosen dieser Art, meistens mit etwa prismatischer Form, werden in der Hausinstallationstechnik verwendet, um die Installationsrohre über dem Verteiltableau in der Decke zusammenzuführen. Der Grössenbedarf und weitere Anforderungen sind naturgemäss sehr verschieden, je nachdem ob es sich um Einfamilienhäuser, Mehrfamilienhäuser oder grosse Objekte wie Büro- oder Verwaltungsbauten usw. handelt.

Der Erfindung liegt die Aufgabe zugrunde, eine Rangierdose zu schaffen, welche ausgehend von einer in sich geschlossenen Einheit sich baukastenartig erweitern lässt, um sowohl einfache wie auch beliebig komplexe Rangieraufgaben und vielfältige Verteilprobleme lösen zu können.

Die Lösung besteht erfindungsgemäss darin, dass zwei gegenüberliegende Seitenwände der im wesentlichen prismatischen Dose je einen übereinstimmenden, von der Deckelfläche ausgehenden Ausschnitt aufweisen, der mit einer herausnehmbar geführten Platte abgedeckt ist. Dadurch ist es möglich, durch Aneinanderreihen mehrerer Einzeldosen unter Freilassung der benachbarten Wandausschnitte beliebig grosse Rangierräume zu schaffen. Dabei kommt man mit einem einzigen Grundmodell aus, was die Herstellung und Lagerhaltung erheblich vereinfacht.

Verschiedene vorteilhafte weitere Ausgestaltungen des im Anspruch 1 definierten Erfindungsgegenstandes sind in den Ansprüchen 2 bis 8 angegeben.

Nachstehend wird die Erfindung anhand eines Ausführungsbeispiels in Verbindung mit der Zeichnung näher erläutert.

Fig. 1 ist der Grundriss einer Rangierdose von der offenen Deckelseite her gesehen, wobei links der Wandausschnitt durch eine Platte verschlossen und rechts bei offenem Ausschnitt eine zweite Dose angesetzt ist,

Fig. 2 ist ein Schnitt entlang der Linie II - II in Fig. 1, und

Fig. 3 ist ein Schnitt entlang der Linie III - III in Fig. 1 unter Weglassung der Platte.

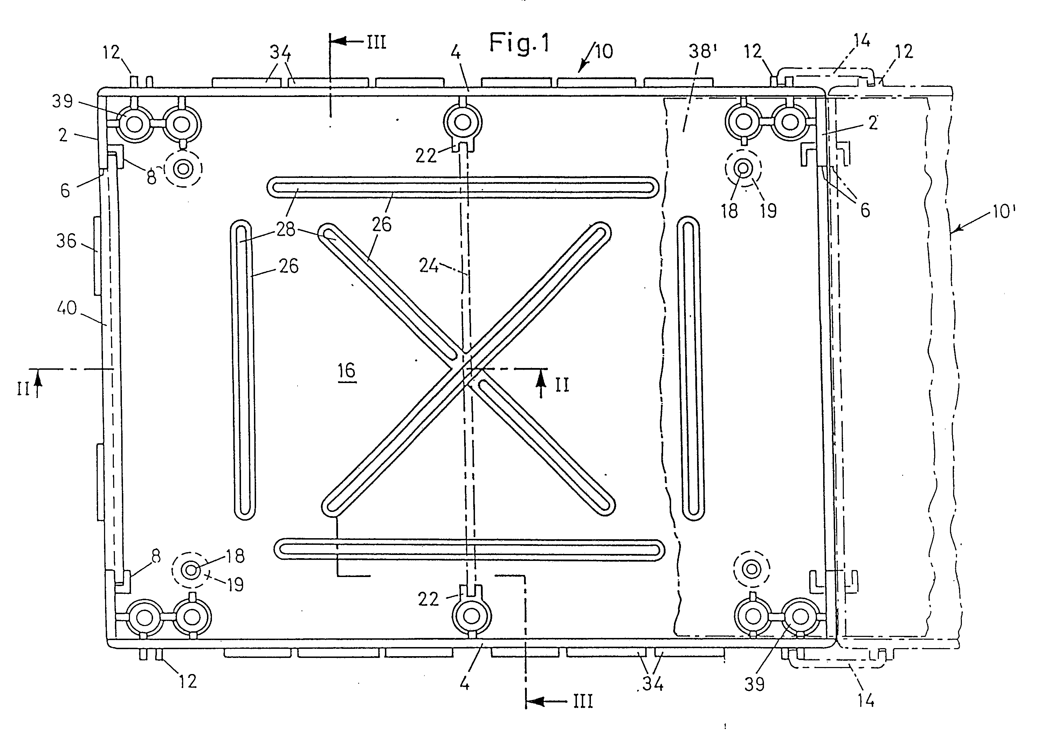

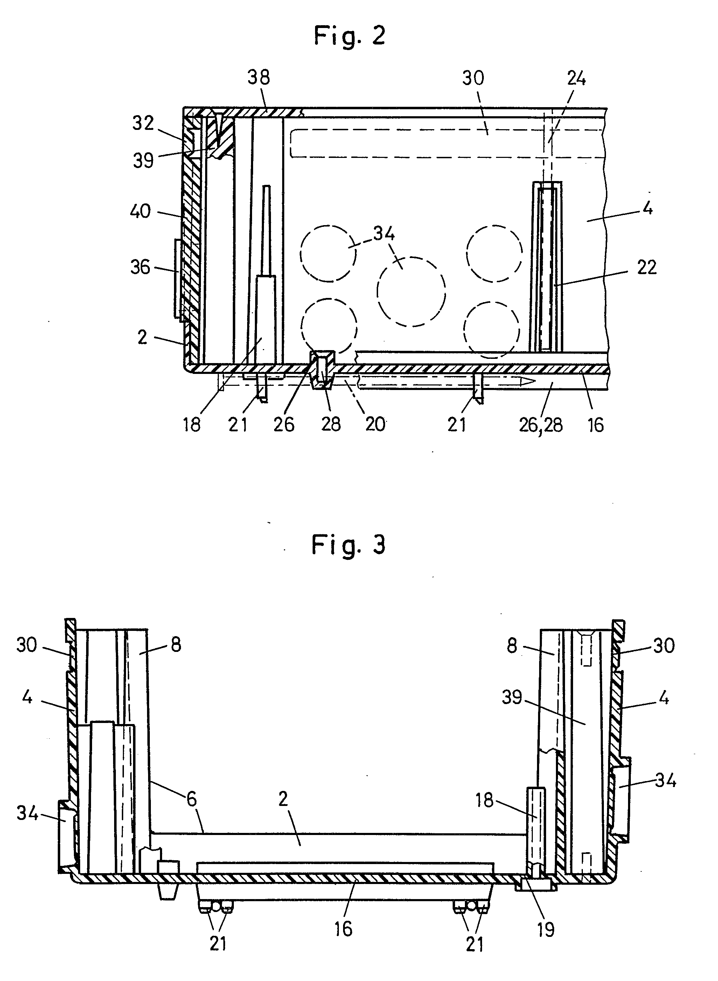

Die praktisch prismatische Unterputz-Rangierdose nach Fig. 1 bis 3 weist einen Boden 16 und vier von ihm ausgehende Seitenwände 2 bzw. 4 auf. Die dem Boden gegenüberliegende, offene Deckelfläche lässt sich mit einem rechteckigen Deckel 38 verschliessen, welcher auf vier in den Ecken des Dosenraumes stehenden Säulen 39 festgeschraubt wird. Zwei gegenüberliegende Seitenwände - im vorliegen-den Fall die Schmalwände 2 - weisen je einen übereinstimmenden Ausschnitt 6 auf, der von der Deckelfläche ausgeht und vorzugsweise rechteckig ist. Eine Platte 40, welche den Ausschnitt 6 abdeckt, lässt sich mit zwei Seitenrändern in entsrechende Führungen 8 einschieben, die an der Dosen-Innenseite, von der Deckelfläche ausgehend, entlang den Ausschnitt-Seitenrändern verlaufen. Die Platte 40, die bei Bedarf herausnehmbar ist, schliesst an der Dekkelfläche bündig mit der Seitenwand 2 ab. Wie aus Fig. 3 ersichtlich, ist die Höhe der ausgeschnittenen Seitenwände 2 um die Dicke des Deckels 38 gegenüber den nicht ausgeschnittenen Seitenwänden 4 verkürzt. Im Falle der Verwendung einer einzigen Dose 10 hält der hinter den Rändern der Seitenwände 4 versenkte Deckel 38 beide eingesetzten Platten 40 fest; wird hingegen eine oder mehrere Dosen 10' seitlich angefügt (Fig. 1), so werden an den aneinanderstossenden Seitenwänden 2 die Platten 40 herausgenommen, und es kann ein verlängerter, über zwei oder mehrere Dosen sich erstrekkender Deckel 38' eingesetzt werden.

An den nicht ausgeschnittenen Seitenwänden 4 sind in den Eckbereichen aussen zur Deckelfläche senkrecht verlaufende Führungen 12 mit Nuten zum Einschieben von Verbindungsklammern 14 vorgesehen. Hierdurch können benachbarte Dosen 10, 10' zusammengeschlossen und exakt aufeinander ausgerichtet werden. Natürlich können solche Verbindungsmittel auch anders gestaltet sein, z.B. in Form von Keilen, als Schnappverbindung usw.

Unterputz-Rangierdosen dieser Art werden normalerweise in einer Decke einbetoniert, wobei die Deckelfläche nach unten auf der Schalung aufliegt. Die dargestellte Dose ist am Boden 16 mit vier Führungen 18 in Form eines angegossenen Röhrchens versehen. Diese dienen zum Durchstecken von Befestigungsstiften (Stahlnägeln), mit denen die Dose auf der Schalung fixiert wird. Solche Stifte 20 werden zweckmässigerweise mit der Dose mitgeliefert; aussen am Dosenboden sind hierfür Paare von benachbarten Zapfen 21 angebracht, zwischen denen vier Stifte 20 für den Versand festgeklemmt werden. Die Führungen 18 sind über je eine Sollbruchstelle 19 (verringerte Wandstärke) mit dem Boden 16 verbunden, so dass sie samt den Stiften 20 beim Ausschalen leicht beseitigt werden können. Im Doseninnern, etwa in der Mitte der beiden Seitenwände 4, sind ferner Nutführungen 22 vorgesehen, in welche eine Stützwand 24 eingeschoben wird, bevor die Dose auf der Schalung fixiert wird. Diese die Höhe des Dosenraumes einnehmende und sich quer über die Bodenmitte erstreckende Wand stützt den Boden 16 während des Betonierend wirksam ab und wird nach dem Ausschalen entfernt.

Der Dosenboden 16 weist im Rechteck sowie kreuzförmig angeordnete Nuten 28 auf, die beidseitig mit Wülsten 26 gesäumt sind. Die Nuten 28 dienen zum Eingriff selbstschneidender Schrauben, mit denen Klemmen, DIN-Schienen, Apparate u. dgl. am Dosenboden befestigt werden. Ausserdem ist das Innere der Dose mit verschiedenen vorgebohrten Säulen geeigneter Höhe für Montagezwecke versehen. Die Anordnung ist so getroffen, dass die Dose - oder mehrere zusammengefügte Dosen - auch als Kleinverteiler ausgebaut werden kann; für einzubauende Apparate wie Fehlerstrom-Schutzschalter usw. stehen geeignete Abdeckungen als Berührungsschutz zur Verfügung.

An den Seitenwänden 4 wie auch an den Platten 40 sind runde Stutzen 34 bzw. 36 zum Einführen von Installationsrohren vorhanden; Abdeckungen der Stutzen-Bohrungen können leicht nach Bedarf ausgeschnitten werden. Ebenfalls an den Seitenwänden 4 sowie an den Platten 40 befinden sich, mehr in der Nähe des Deckels 38, vorgeformte Schlitzdurchbrechungen 30 bzw. 32. Diese werden ebenfalls nach Bedarf geöffnet bzw. Ausgeschnitten, um Flachkabel in die Dose einzuführen. Mittels einem passenden Stutzen, welcher mit einbetoniert werden kann, lassen sich Flachkabel aus der Rangierdose unter Putz für die Unterteppichverlegung überführen.

**Patentansprüche**

1. Unterputz-Rangierdose mit abnehmbarem Deckel für die Elektroinstallation, dadurch gekennzeichnet, dass zwei gegenüberliegende Seitenwände (2) der im wesentlichen prismatischen Dose (10) je einen übereinstimmenden, von der Deckelfläche ausgehenden Ausschnitt (6) aufweisen, der mit einer herausnehmbar geführten Platte (40) abgedeckt ist.

2. Rangierdose nach Anspruch 1, dadurch gekennzeichnet, dass der Ausschnitt (6) rechteckig ist und dass die Dosen-Innenseite an den von der Deckelfläche ausgehenden Seitenrändern mit Führungen (8) für die Platte versehen ist.

3. Rangierdose nach Anspruch 1 oder 2, dadurch gekennzeichnet, dass die Höhe der ausgeschnittenen Seitenwände (2) gegenüber den andern Seitenwände (4) um die Dicke des Deckels (38) verkürzt ist.

4. Rangierdose nach einem der Ansprüche 1 bis 3, dadurch gekennzeichnet, dass in den Eckbereichen der nicht ausgeschnitten Seitenwände (4) aussenseitige Anschlussorgane (12) für Verbindungsmittel (14) zum Zusammenschluss mit einer benachbarten Dose (10') vorhanden sind.

5. Rangierdose nach einem der vorangehenden Ansprüche, dadurch gekennzeichnet, dass am Dosenboden (16) zum Durchstecken von Befestigungsstiften (20) Führungen (18) vorhanden sind, die mit dem Boden über Sollbruchstellen (19) verbunden sind.

6. Rangierdose nach einem der vorangehenden Ansprüche, dadurch gekennzeichnet, dass im Doseninnern Halteorgane (22) für eine wegnehmbare, sich über die Bodenmitte erstreckende Stützwand (24) vorhanden sind.

7. Rangierdose nach einem der vorangehenden Ansprüche, dadurch gekennzeichnet, dass der Dosenboden (16) beidseitig mit Wülsten (26) versehene Nuten (28) für den Eingriff selbstschneidender Schrauben aufweist.

8. Rangierdose nach einem der vorangehenden Ansprüche, dadurch gekennzeichnet, dass an den vollen Seitenwänden (4) und an den Platten (40) vorgeformte Schlitzdurchbrechungen (30, 32) zum Durchführen von Flachkabeln vorhanden sind.

Fig.1

# Fig. 2

# Fig. 3